Europäisches Patentamt

European Patent Office

Office européen des brevets

(11) Publication number: **0 129 944**

A1

## EUROPEAN PATENT APPLICATION

(21) Application number: 84200922.7

(22) Date of filing: 26.06.84

(51) Int. Cl.⁴: **B 60 P 3/38**

(30) Priority: 27.06.83 NL 8302269

(43) Date of publication of application:
02.01.85 Bulletin 85/1

(84) Designated Contracting States:
BE DE FR GB IT LU NL

(71) Applicant: POLEC PROJECT ENGINEERING B.V.
Zandvoorterpad 10 P.O. Box 117
NL-2050 AC Overveen(NL)

(72) Inventor: Albregts, Leopold Alexander
Laan van Meerdervoort 189 h
NL-2517 BA The Hague(NL)

(74) Representative: van der Beek, George Frans et al,
Nederlandsch Octrooibureau Johan de Wittlaan 15 P.O.
Box 29720
NL-2502 LS 's-Gravenhage(NL)

(54) Tent construction to be fixed to a vehicle.

(57) Tent construction adapted to be fixed on the roof of an auto car. The construction comprises a self-supporting bearing frame (3), composed of a fixing part (4,5) adapted to be detachably fixed on the roof of an auto car and a canvas carrying part (8,13) to which the canvas is foldably attached and which is movable with respect to the fixing part from a retracted position in which it substantially coincides with the fixing part to an extended position in which it substantially lies in line and level with the fixing part (4,5) and in which it is extending beyond the roof of the auto car.

fig-5

Croydon Printing Company Ltd.

EP 0 129 944 A1

Tent construction to be fixed to a vehicle.

The invention relates to a tent construction, in particular to a tent construction adapted to be fixed to a vehicle, such as an auto car, in particular on the roof thereof.

To reach a location for spending ones free time in a recreative way, use is at present often made of an auto car, not only to arrive at the place of destination in an easy, quick and comfortable way, but also to transport the attributes which in many cases are needed for exercising recreative activities, for which purpose the auto car often is provided with an imperial fixed to the roof thereof.

When recreating in the country one often feels the need of protection against weather- and sun influences or against privacy disturbing curious glances of persons being in the neighbourhood, and for this purpose use may be made of tents or screens which are carried along separately, or it is required to take refuge in protection possibilities which are present by chance at the selected location.

Tents or screens which are separately carried along have the disadvantge that they take up additional room during transport thereof and that the setting up and fitting thereof is time consuming and troublesome.

The object of the invention is to provide a solution of the above problems and according to the invention a tent construction is provided to that end which can be fixed on the roof of an auto car and can be used in combination with an auto car or similar vehicle, which tent construction is characterized in that it comprises a self-supporting bearing frame, said frame having at least one part adapted to be detachably fixed on the roof of a vehicle and a canvas carrying part, to which the canvas is foldably secured and which part is movable with regard to the first mentioned part from a position in which it substantially coincides with the fixing part to a position in which it at least substantially is in a line and level of the fixing part, sothat the canvas carrying part in mounted position of the bearing frame extends beyond the roof of the vehicle.

With the tent construction according to the invention the possibility is obtained to carry along a tent with a vehicle, which tent in folded condition does not take up additional luggage room and which can be set up and fixed up in a very simple and unique way. The set up tent is fixedly connected with the auto car, and the construction can be executed in such a way, that the luggage hold of the auto car is falling within the room of the set up tent, sothat among others carrying luggage from the auto car to a possible separately set up tent is avoided.

Further the tent construction can be carried out in such a way, that it in non-use-condition completely can be received and fixed underneath an imperial applied to the roof of an auto car, for example an imperial for a surf glider to be carried with the auto car, such as will be explained further with reference to the drawings.

Further characteristics of embodiments of a tent construction according to the invention, falling within the scope of the invention, are defined in the sub claims and might appear from the following description.

The invention will be explained further hereafter with reference to the drawings, in which is shown by way of example a preferred embodiment cf a tent construction according to the invention.

Fig. 1 shows an outline of an embodiment of a tent construction according to the invention in set up condition, applied to an auto car.

Fig. 2 shows a side view of the tent construction according to fig. 1 in folded and stored condition on the roof of the auto car.

Fig. 3 shows an outline of a perspective view of the bearing frame of the tent construction according to figs. 1 and 2 in unfolded condition.

Fig. 4 shows a top view of the bearing frame according to fig. 3 in folded and stored condition.

Fig. 5 shows a top view of the bearing frame according to fig. 2, in which the canvas carrying part is unfolded.

0129944

3

Fig. 6 shows a perspective view of a hinge construction applied in the bearing frame.

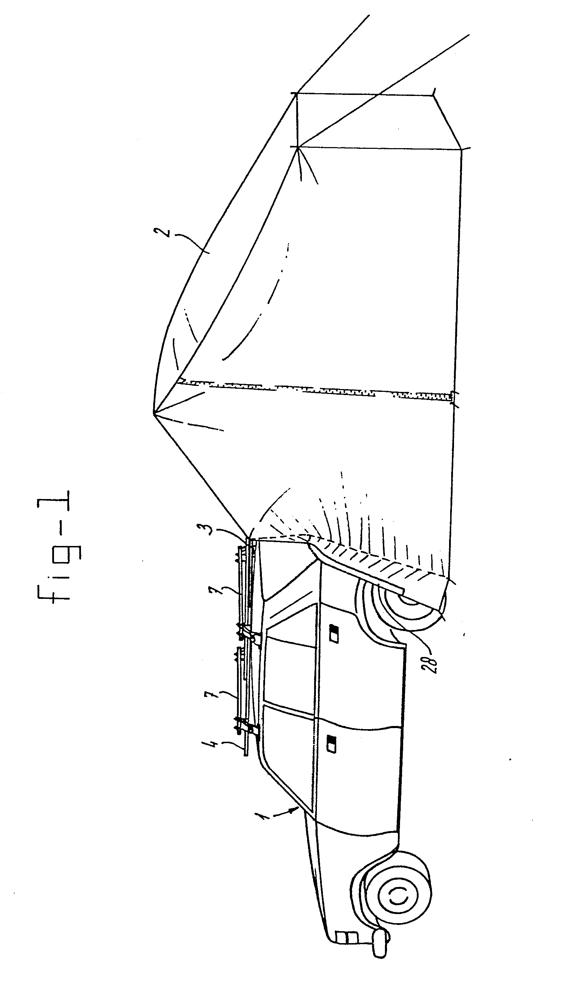

Referring to fig. 1 an auto car 1 is shown, at the rear side of which a tent 2 is set up, which tent is foldably secured to a retractable and collectable bearing frame, in fig. 1 generally indicated with the reference number3 and which is fixed on the roof of the auto car in a way to be explained hereinafter.

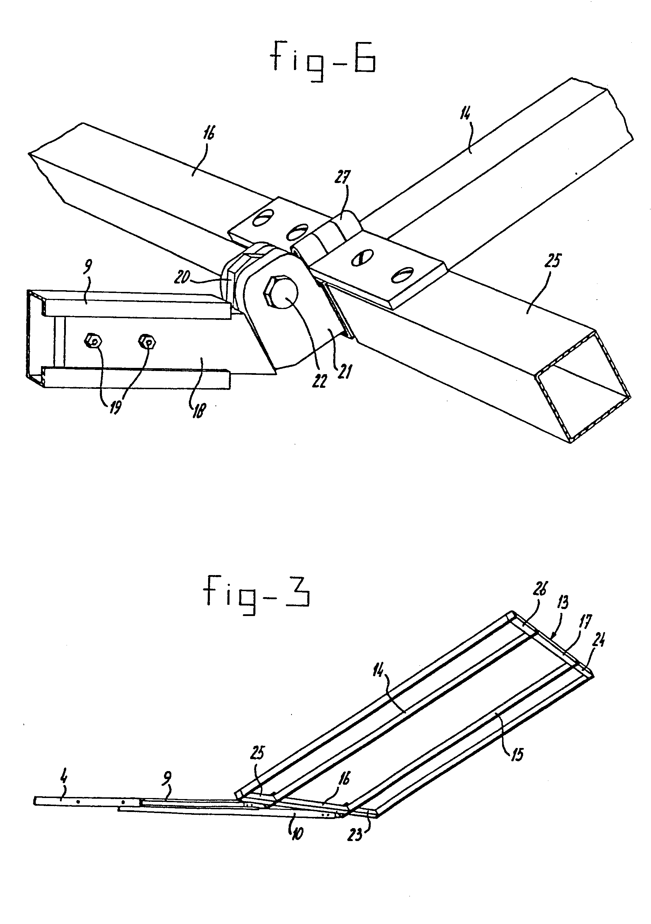

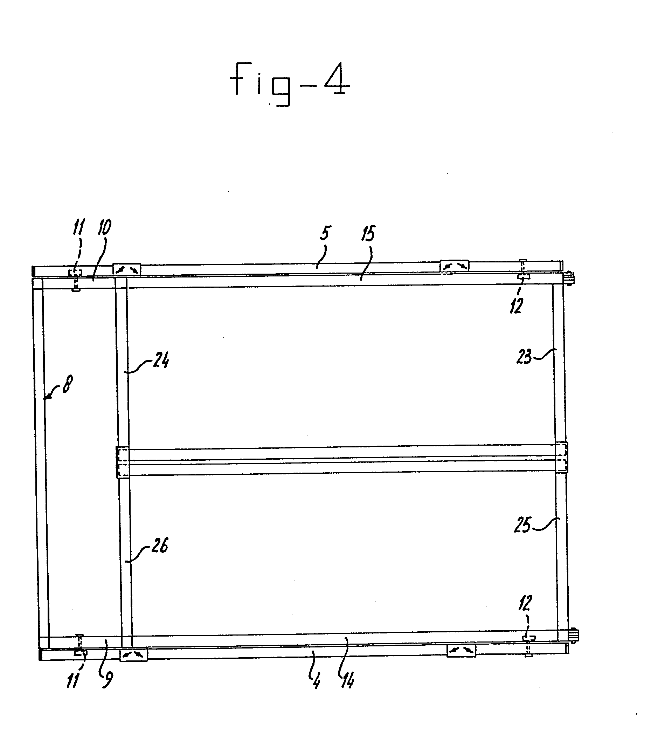

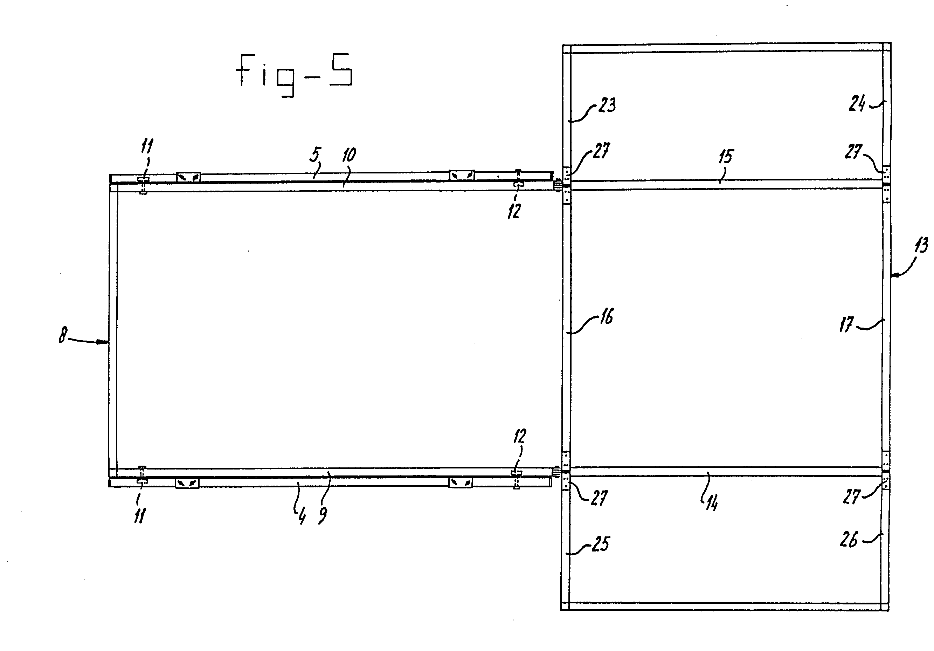

In the shown embodiment the bearing frame 3 is composed of essentially three parts. Primiraly the bearing frame includes a fixing part, consisting of a pair spaced apart parallel straigt profile parts 4 and 5, of which each in the shown embodiment, fixedly, but detachably is secured underneath the girders 7 of an imperial secured on the roof of the auto car, which might serve to carry among others a surf-glider, said profile part being fixed by means of fixing means 6. The carrying frame comprises a rectangular U-shaped rigid frame part 8 with two parallel legs 9 and 10 consisting of straight profile parts, extending in the position shown in figs. 4 and 5 within the fixing profiles 4 and 5, but which are displaceable from the shown position to the right side in figs. 4 and 5 to a position in which they substantially are in line and level in parts 4 and 5, i.e. to a extended position, such as shown in fig. 3. For facilating the displacing of the frame part 8 along the fixing parts and for mutual fixing of the mentioned part, the frame part 8 is provided with rolls 10 engaging the profile parts 4 and 5 and the profile parts 4 and 5 are provided with rolls 12 engaging the profile parts 9 and 10.

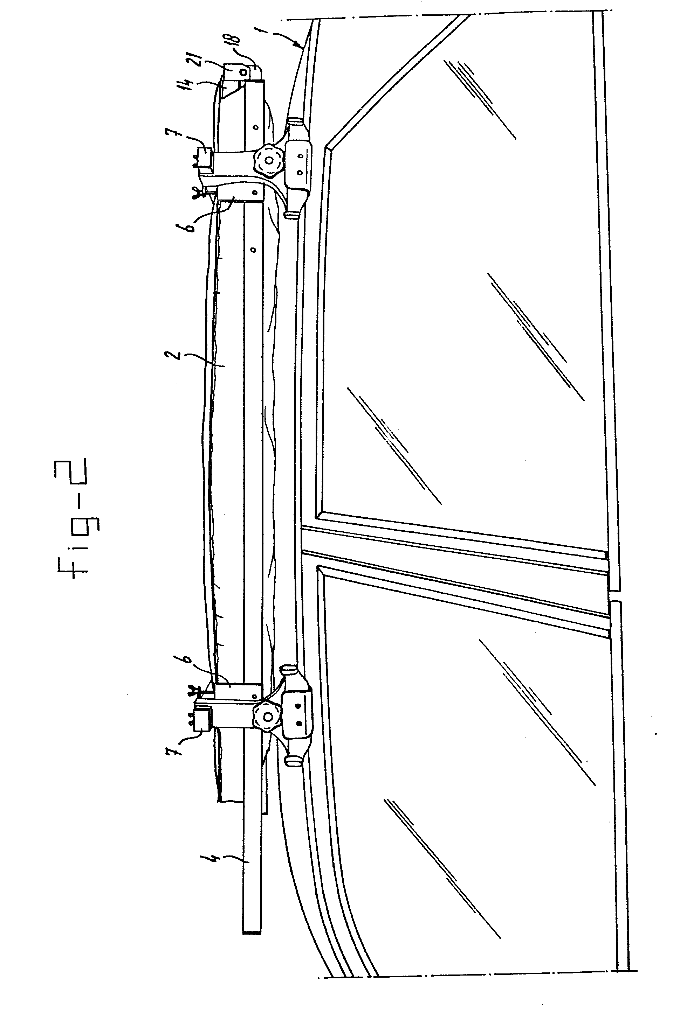

Finally the bearing frame 3 comprises a part 13, to which the canvas can be secured in a foldable way. The part 13 is composed of rectangular, rigid, middle frame part, consisting of two parallel spaced apart profile parts 14 and 15, of which the mutual distance is equal to the mutual distance of the profile parts 9 and 10, and which are rigidly interconnected by means of two parallel spaced apart profile parts 16 and 17. One end of the profile parts 14 and 15 is hingedly connected to the end of profile parts 9 respectively 10 through a hinge construction which is shown in detail for the hinged connection of profile parts 9 and 14 in fig. 6. The hinge construction shown in fig. 6 comprises a part which is fixedly connected at the end of the profile part 9, which fixedly connected part consists of a plate 18 which is shifted in the C-shaped profile part 9, which plate is secured to the profile part 9 by means of bolts 19 and which plate extends with one end beyond the profile part, which end is beveled at the head side. On the head end of the plate 18 an ear 20 is applied projecting upwardly and provided with a hole (not visible). Further the hinge construction comprises a hinge part which is fixed in the end of the tubular profile part 14, provided with two parallel spaced apart cheeks 21 between which is arranged the ear 20 of the other hinge part, and which cheeks are provided with a hole being in line with each other and with the hole in the ear 20, through which hole a hinge pin 22 being applied. With said hinge construction the frame part 13 can be moved with respect to the carrying frame part 8 between a folded up position, such as shown in fig. 2 and 4 and an unfolded position, such as shown in figs. 3, 5 and 6, in which latter position the frame part is inclined with respect to the frame part 8 due to the fact that the edges of the cheeks 21 facing the plate 18 are abutting the beveled end of the plate 18.

On both sides of the middle frame part  rectangular U-shaped frame parts are applied  which are hingedly foldable and unfoldable, of which the legs, 23, 24 respectively 25,26 with the ends thereof are hingedly connected to the ends of the profile parts 16 and 17 in the way as shown in fig. 6 by means/a of normal  hinge construction 27 known per se, in such a way that the profile parts can be unfolded to a position shown in figs. 3, 5 and 6 or can be folded shown in fig. 4. In fig. 2 the tent construction as described hereabove can be received in folded condition underneath the imperial 7 sothat is does not take up additional luggage room. The canvas is attached to the  frame part 13 and is folded in such a way that the whole is packed within the dimensions of the frame part 13. In this non-use position the U-shaped side parts are folded inwardly with the profile parts 23, 24 and 25, 26 thereof over the frame part 16 in a position as shown in fig. 4. Further the frame part 13 with the inwardly folded side parts in folded position is laid upon the bearing frame part 8, said bearing frame part 8 being with its profile parts 9 and 10 completely in retracted position within the profile parts 4 and 5.

For setting up the tent, the bearing frame 8 is shifted with its profile parts 9 and 10 over a desired distance beyond the profile parts 4 and 5, the frame part 13 is unfolded with the side parts to the position shown in fig. 3 and the canvas is unfolded, after which the tent further can be set up on a way known per se by means of frame poles, tent pegs and guy-ropes, for example as shown in fig. 1.

In the shown embodiment the tent is set up behind the auto car, the luggage compartment of the auto car being within the tent. To obtain a possibility of accomodation to various shapes and dimensions of a luggage compartment an arc-shaped adapter of flexible material can be applied in a flap of the tent hanging over the luggage compartment, said adapter being indicated in fig. 1 with reference number 28, and which adapter can be clamped over the luggage compartment. By providing the extensible bearing frame part the bearing frame can be adapted to various dimensions of auto cars or similar vehicles. The inclined position of the canvas carrying part provides the possibility of setting up a tent which is higher than the height of the auto car, which is very desired in many cases. The construction according to the invention can be applied in all cases where it is desired to have available a protected, closed room in the country. The construction is such that this easily can be fixed on the roof of the auto car. In addition to the fact that this construction can be fixed to and underneath an imperial, it is also possible to provide the bearing frame with means for directly fixing to the roof of the auto car. It is noted that the invention is not limited embodiments falling within the scope of the invention as defined in the claims.

The shape of the frame parts can differ from the described rectangular frame parts; further the profile parts which are shown in the shown embodiment with rectangular tubular profile parts can have each other proper cross section shape, such as for example a circular cross section.

CLAIMS

1. Tent construction, characterized in that it comprises a self supporting bearing frame, said frame comprising at least a part adapted to be fixed detachably on the roof of a vehicle and a canvas carrying part to which the canvas is foldably attached and which canvas carrying part is movable with respect to the first mentioned part from a position in which it substantially coincides with the fixing part to a position in which it at least substantially is in line and level with the fixing part in such a way that the canvas carrying part in mounted position of the bearing frame extends beyond the roof of the vehicle.

2. Tent construction according to claim 1, characterized in that the canvas carrying part consists of a first part being movable with respect to the mentioned fixing part from a position in which it substantially coincides with the fixing part to a position in which it is in line and level with the fixing part and a second part being movable with respect to the mentioned first part from a position in which it substantially coincides with the first part to a position in which it at least substantial is in line and level with the said first part in the same direction as the first part is in line and level with the fixing part, the canvas being foldably attached to said second part.

3. Tent construction according to claim 1, characterized in that the canvas carrying part is applied displaceable longitudinally of the fixing part.

4. Tent construction according to claims 2 and 3, characterized in that the first part of the canvas carrying part which is movable with respect to the fixing part is displaceable longitudinally of the fixing part, the second part, movable with respect to the first part, being with one end hingedly about a horizontal transverse axis foldably and unfoldably connected to the end of the first part which is displaceable beyond the fixing part.

5. Tent construction according to claim 3, characterized in that the fixing part of the bearing frame comprises two parallel spaced oblong straight profile parts, provided with means for fixedly connecting these parts to the roof of a vehicle, the canvas carrying part comprising a rigid rectangular frame part composed of oblong straight profile parts, of which two opposite parallel profile parts are longitudinally displaceably attached to the inner side of the profile parts of the fixing part.

6. Tent construction according to claims 4 and 5, characterized in that the first part of the canvas carrying part, which is movable with respect to the fixing part, is formed by the said rigid rectangular stiff part which is displaceable longitudinally of the fixing part according to claim 5, the said second part consisting of a frame part composed of straight profile parts, comprising a rectangular middle rigid frame part composed of straight profile parts, which with one end is hingedly about a horizontal transverse axis foldable and unfoldable connected to the said first part forming frame part which is displaceable out of the fixing part and two on both sides of the said rigid middle frame part applied angular frame composed of straight profile parts , which with one longitudinal side is hingedly about a horizontal longitudinal axis connected to a respective longitudinal side of the middle frame part and which are unfoldable from the position in which these parts are abutting the middle frame part to a position in which they extend laterally from said frame part, the canvas being foldably attached to the middle frame part.

7. Tent construction according to claims 4 and 6, characterized in that the said foldable and unfoldable second part is attached to the said first part by means of a hinge construction in such a way that in unfolded position the second part is located upwardly inclining under an acute angle with respect to the prolongation of the said first part.

8. Tent construction according to claim 6, characterized in that the said unfoldable frame parts which are applied on both sides of the middle frame parts are secured to the middle frame part by means of hinges which are attached to the abutting angular points of the middle frame parts respectively the side frame parts.

9. Tent construction according to one of the previous claims, characterized in that the fixing part of the bearing frame is provided with fixing means for fixing of said part to the bottom side of an imperial which has been attached to the auto car or similar vehicle or which is adapted to be secured thereto.

10. Tent construction according to claim 1 till 9 inclusive, characterized in that the fixing part of the bearing frame is provided with fixing means for directly fixing of said part to the roof of an auto car or similar vehicle.

11. Tent construction according to one of the previous claims, fixed to the roof of an auto car or similar vehicle.

---

fig-1

Fig-2

0129944

Fig-6

Fig-3

# fig-4

Fig-5

0129944

0129944

Application number

# EUROPEAN SEARCH REPORT

## European Patent Office

EP 84 20 0922

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int Cl ³) |
| X | US-A-3 186 419 (McCARROLL) <br> * claims; figures 1-5 * | 1-3 | B 60 P 3/38 |
| X | US-A-3 231 161 (McCALTHORPE) <br> * claims; figures 1,2 * | 1-3 | |
| A | FR-A-2 486 376 (REYNAL) <br> * whole document * | 1 | |
| A | FR-A-2 415 560 (HILLARY-COLLINGS) | | |
| A | US-A-3 680 909 (GREIF) | | |
| A | BE-A- 540 320 (BRINCK) | | TECHNICAL FIELDS SEARCHED (Int. Cl. ³) |
| | | | B 60 P |

The present search report has been drawn up for all claims

| Place of search | Date of completion of the search | Examiner |
|---|---|---|
| THE HAGUE | 20-09-1984 | PIRIOU J.C. |